# EUROPÄISCHE PATENTSCHRIFT

(11) **EP 0 610 329 B1**
(45) Veröffentlichungstag und Bekanntmachung des Hinweises auf die Patenterteilung: **29.07.1998**
(21) Anmeldenummer: 92922422.8
(22) Anmeldetag: 23.10.1992
(51) Int. Cl.: H04N 3/223, H04N 3/233

(54) **SCHALTUNG ZUR KONTINUIERLICHEN ZOOM-EINSTELLUNG DER BILDBREITE IN EINEM FERNSEHEMPFÄNGER**
CIRCUIT FOR THE CONTINUOUS ZOOM SETTING OF THE IMAGE WIDTH IN A TELEVISION RECEIVER
CIRCUIT DE REGLAGE EN CONTINU DE LA LARGEUR D'IMAGE PAR EFFET DE ZOOM DANS UN RECEPTEUR DE TELEVISION

(30) Priorität: 02.11.1991 DE 4136178
(43) Veröffentlichungstag der Anmeldung: 17.08.1994
(73) Patentinhaber: DEUTSCHE THOMSON-BRANDT GMBH, 78048 Villingen-Schwenningen (DE)
(72) Erfinder: RILLY, Gerard, D-7731 Unterkirnach (DE); LOPEZ, Daniel, D-7744 Königsfeld 6 (DE)
(86) Internationale Anmeldenummer: EP9202437
(87) Internationale Veröffentlichungsnummer: WO9309633

(56) Entgegenhaltungen:
- DE-B- 1 121 648
- GB-A- 2 140 640
- US-A- 4 028 726

## Beschreibung

Die Erfindung geht aus von einer Schaltung gemäß dem Oberbegriff des Anspruchs 1.

Bei Fernsehempfängern mit unterschiedlichen Bildformaten von z.B. 4:3 und 16:9 besteht der Wunsch, die Bildbreite im Sinne eines Zoomeffektes einstellbar zu machen. Das bedeutet z.B., daß nur ein Bruchteil von 2/3 des Signals der Zeilenhinlaufzeit den Bildschirm vom linken Rand bis zum rechten Rand voll ausfüllt, also die Ablenkgeschwindigkeit im Bereich um die Zeilenmitte herum erhöht und zum Zeilenanfang und zum Zeilenende hin verringert wird. Da der Zeilenendstufentransistor als reiner Schalter arbeitet, ist eine derartige Änderung der Bildbreite durch eine Änderung der Ansteuerung des Endstufentransistors ohne weiteres nicht möglich.

Der Erfindung liegt die Aufgabe zugrunde, eine einfache Schaltung für eine kontinuierliche Einstellung der Bildbreite im Sinne eines Zoomeffektes zu schaffen, die einen möglichst geringen Einfluß auf die Strom- und Spannungsverhältnisse am Zeilenendstufentransistor und auf die Hochspannung hat.

Diese Aufgabe wird durch die im Anspruch 1 angegebene Erfindung gelöst. Vorteilhafte Weiterbildungen der Erfindung sind in den Unteransprüchen angegeben.

Zeilenablenkstromes zu beeinflussen, wird also in vorteilhafter Weise zusätzlich zur kontinuierlichen Einstellung der Bildbreite im Sinne eines Zoomeffektes ausgenutzt. Der Zoomeffekt, z.B. die Vergrößerung der Bildbreite durch Erhöhung der Ablenkgeschwindigkeit, erfolgt also nicht durch Amplitudenänderung von Steuersignalen, sondern lediglich durch eine Änderung der Abstimmung der Zeilenendstufe durch eine bewußte Änderung des wirksamen Wertes des insgesamt wirksamen Tangenskondensators.

Ein wesentlicher Vorteil der Erfindung besteht darin, daß ein relativ großes Verhältnis zwischen der minimalen und der maximalen Bildbreite erzielt werden kann, ohne daß eine nachteilige Beeinflussung der Hochspannung, der Ost/West-Kissenkorrekturschaltung oder des Zeilenendstufentransistors eintritt. Wesentlich dabei ist, daß der Strom durch den Zeilenendstufentransistor nicht erhöht werden muß und somit dieser Transistor nicht zusätzlich belastet oder gefährdet wird. Der Tangenskondensator und der zusätzliche Kondensator können im Primärkreis, also unmittelbar in Reihe mit den Ablenkspulen liegen. Vorteilhaft ist es, den Tangenskondensator im Sekundärkreis eines zusätzlichen Transformators anzuordnen, dessen Primärwicklung in Reihe mit den Ablenkspulen liegt. Bei dieser Lösung lassen sich die wirksamen Spannungen, insbesondere die Parabelspannung am Tangenskondensator, hinsichtlich Polarität und Amplitude besser beherrschen.

Die Erfindung wird im folgenden anhand der Zeichnung an mehreren Ausführungsbeispielen erläutert. Darin zeigen
- Fig. 1: eine erfindungsgemäße Schaltung in vereinfachter Form auf der Primärseite der Ablenkschaltung,
- Fig. 2, 3, 4: Kurven zur Erläuterung der Wirkungsweise und
- Fig. 5: eine detaillierte Schaltung mit der erfindungsgemäßen Zusatzschaltung auf der Sekundärseite.

Durch die GB-A-2 140 640 ist eine Schaltung zur Betriebsspannungsversorgung und Ablenkung in einem Monitor mit mehreren Horizontalabtastraten bekannt, bei der mit einem Schalter verschieden hohe Betriebsspannungen an die Horizontalablenkschaltung angeschaltet werden und mit einer verschieden hohen Spannung an einer Zenerdiode die Horizontalfrequenz und der Betrag der sogenannten S-Geometriekorrektur gesteuert wird.

Durch die DE-B-1 121 648 ist ein Fernsehempfangsgerät mit einem Bedienungselement zur Veränderung der Bildhöhe und Bildbreite im gleichen Maßstab bekannt, bei der zur Änderung der Bildgröße die sägezahnförmigen Ablenkströme bei Betätigung des Bedienungselementes derart verformt werden, daß der mittlere Teil des ansteigenden Sägezahnstrom steiler wird, ohne daß eine wesentliche Erhöhung der Amplitude erfolgt.

Bei der Erfindung wird also sinngemäß dem ohnehin vorhandenen Tangenskondensator ein weiterer Kondensator zugeordnet. Dieser weitere Kondensator wird jeweils von Beginn in Zeilenmitte für eine einstellbare Zeit leitend gesteuert. Die Erfindung greift also nicht in die eigentliche Funktion des Zeilenendstufentransistors ein. Sie beruht vielmehr auf einer bewußten Änderung der Tangenskorrektur oder S-Korrektur durch den in Reihe mit den Ablenkspulen liegenden Tangenskondensator. Die Möglichkeit, mit dem Tangenskondensator die Form des

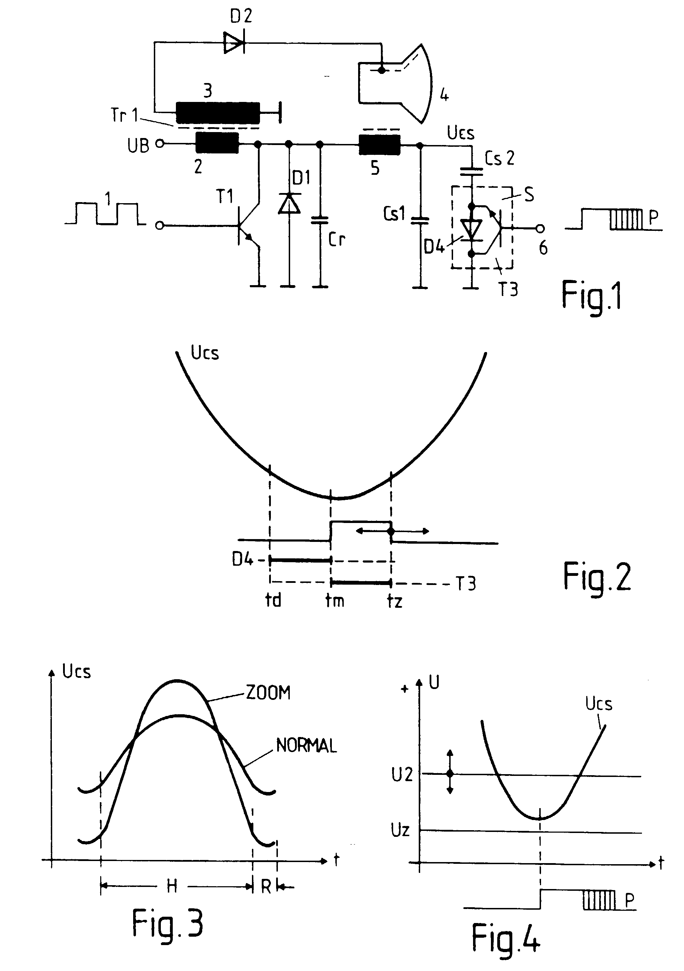

Fig. 1 zeigt eine Zeilenablenkschaltung mit zeilenfrequenten Impulsen 1, dem Zeilenendstufentransistor T1, der Rücklaufdiode D1, dem Rücklaufkondensator Cr, der Primärwicklung 2 sowie der Hochspannungswicklung 3 des Zeilentransformators Tr1, dem Hochspannungsgleichrichter D2, der Bildröhre 4, den Zeilenablenkspulen 5 und dem Tangenskondensator Cs1. Die soweit beschriebene Schaltung ist bekannt.

Dem Tangenskondensator Cs1 ist ein zweiter Kondensator Cs2 über den Schalter S mit dem Transistor T3 und der Diode D4 parallel geschaltet. Der Schalter S wird an der Klemme 6 von der Schaltspannung P betätigt. Die Schaltspannung P steuert den Transistor T3 gemäß Fig. 2 jeweils von Zeilenmitte tm ab für eine einstellbare Zeit bis zum Zeitpunkt tz leitend. Der von Cs2 kommende Strom fließt von td - tm durch die Diode D4, wird dann null und fließt anschließend über den durch P leitend gesteuerten Transistor T3. td und tz liegen symmetrisch zu tm. D4 und T3 sind somit nacheinander für eine gleich lange Zeit leitend. D4 bewirkt eine Klemmung der an S wirksamen Parabelspannung auf Erdpotential. Zur Erläuterung der Wirkungsweise werden zwei Grenzfälle betrachtet:

Normalbetrieb ohne Zoomwirkung. Dabei ist der Transistor T3 durch die Schaltspannung P ständig geschlossen. Das bedeutet, daß Cs2 ständig dem Tangenskondensator Cs1 parallel geschaltet und somit der wirksame Tangenskondensator Cs1 + Cs2 maximal ist. Das bedeutet eine geringe Tangenskorrektur, also eine geringe Verformung des Ablenkstromes. Der Wert des Ablenkstroms zu Beginn und am Ende der Zeilenhinlaufzeit entspricht dann den Ablenkstromwerten am linken und rechten Bildrand. Es wird also das Signal der Zeilenhinlaufzeit vollständig auf der verfügbaren Bildfläche abgebildet. In diesem Fall handelt es sich also um eine übliche Ablenkung mit vollständiger Darstellung des Bildsignals und nur geringfügiger Überschreibung ohne Zoomwirkung.

Sonderbetriebsart mit erhöhter Bildbreite und Zoomwirkung. Der Transistor T3 ist durch die Schaltspannung P ständig gesperrt. Der Kondensator Cs2 ist jetzt nicht mehr wirksam, so daß der wirksame Tangenskondensator Cs entsprechend gering ist. Dann ergibt sich eine große Tangenskorrektur mit einer Erhöhung der Ablenkgeschwindigkeit im Bereich der Bildmitte. Es wird dann ein Teil des Signals der Zeilenhinlaufzeit symmetrisch zur Bildmitte zeitlich so gedehnt, daß dieser Teil die gesamte Breite des Bildschirms ausnutzt und somit das Bild während dieser Zeit vergrößert dargestellt wird. Beispielsweise ist dann das Signal während 40 µs der Zeilenhinlaufzeit symmetrisch zur Zeilenmitte genau vom linken zum rechten Bildrand abgebildet.

Durch Änderung der Dauer der Schaltspannung P, d.h. der Dauer der leitenden Phase des Transistors T3 von tm - tz, ist nun eine kontinuierliche Einstellung zwischen den beiden beschriebenen Zuständen möglich. Das bedeutet, daß das Bild auf alle gewünschten Zwischenwerte zwischen Normalbetrieb und maximaler Zoomwirkung eingestellt werden kann.

Fig. 3 zeigt die Amplitude der Spannung Ucs am Tangenskondensator Csl einmal für Normalbetrieb und einmal für Zoombetrieb mit maximaler Erhöhung der Ablenkgeschwindigkeit im Bereich der Zeilenmitte. Die größere Amplitude von Ucs bei Zoombetrieb wird durch die mehr oder weniger verursachte Verringerung des wirksamen Tangenskondensators Cs erreicht.

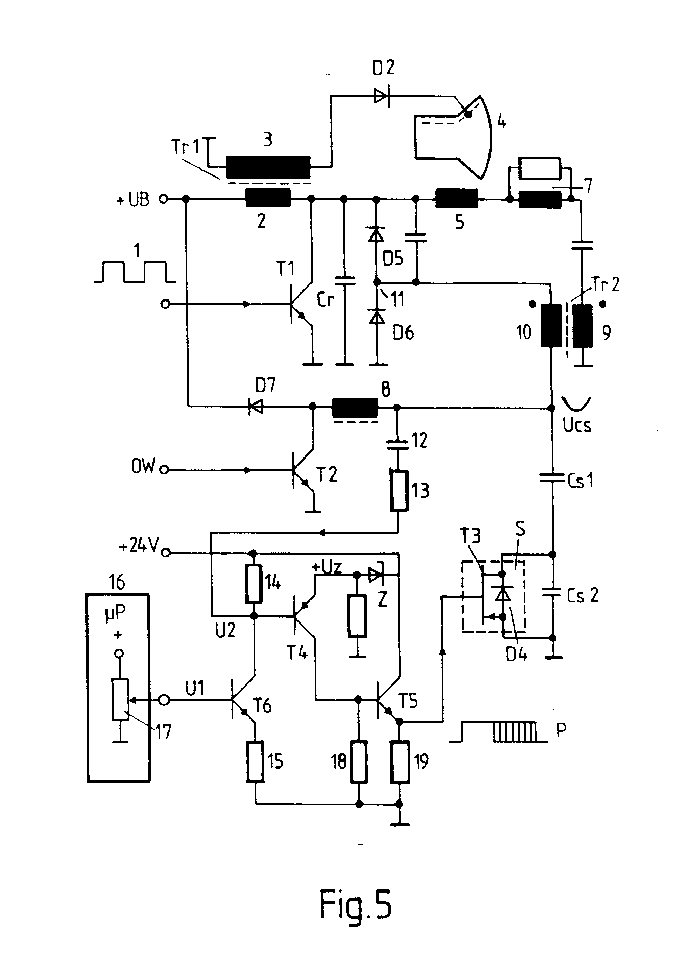

Fig. 5 zeigt zunächst wieder eine Schaltung gemäß Fig. 1. Zusätzlich sind dargestellt die Linearitätsspule 7, zwei Freilaufdioden D5, D6 und die Ost/West-Kissenkorrekturschaltung mit dem Transistor T2, der Diode D7 und der Spule 8. Bei der Schaltung zur Einstellung der Zoomwirkung bestehen zu Fig. 1 folgende Unterschiede. Die Kondensatoren Cs1 und Cs2 sind nicht parallel, sondern in Reihe geschaltet, und der Schalter S liegt parallel zu Cs2. Dadurch ergibt sich wieder die gleiche Wirkung wie in Fig. 1, da beim Kurzschluß von Cs2 wie in Fig. 1 ebenfalls der wirksame Tangenskondensator erhöht wird. Außerdem sind Cs1 und Cs2 nicht wie in Fig. 1 in den Primärkreis eingeschaltet, sondern über den vom Zeilentransformator Tr1 getrennten Transformator Tr2 mit der Primärwicklung 9 und der Sekundärwicklung 10 an den Primärkreis angekoppelt. Das obere Ende der Sekundärwicklung 10 ist mit dem Verbindungspunkt 11 der Freilaufdioden D5, D6 verbunden. Die Steuerung des Transistors T3 im Schalter S durch den Impuls P erfolgt im Prinzip genauso wie anhand von Fig. 1, 2, 3 beschrieben. Im folgenden wird die dargestellte Schaltung zur Erzeugung des Impulses P erläutert. Die Schaltung enthält den Transistor T4, an dessen Emitter eine mit der Zenerdiode Z stabilisierte konstante positive Spannung +Uz angelegt ist. An die Basis des Transistors T4 ist die am Tangenskondensator Cs1 stehende Parabelspannung Ucs über den Kondensator 12 und den Widerstand 13 angelegt. Die Basis ist über den Widerstand 14 mit der positiven Betriebsspannung verbunden und außerdem über den Transistor T6 und den Widerstand 15 geerdet. An die Basis des Transistors T6 ist eine Spannung U1 angelegt, deren Wert einstellbar ist. U1 kommt von dem Mikroprozessor 16, der die gewünschte Zoomwirkung vorgibt. Die Einstellung der Gleichspannung U1 ist durch den Widerstand 17 in dem Prozessor 16 angedeutet. Der Parabelspannung Ucs an der Basis von T4 wird also eine Gleichspannung U2 überlagert, deren Wert vom Prozessor 16 bestimmt ist.

Die Wirkungsweise wird anhand der Fig. 4 erläutert. Wenn Ucs durch entsprechende Einstellung von U1 und U2 oberhalb Uz bleibt, wird der Transistor T4 nicht leitend, so daß auch der Transistor T5 gesperrt bleibt. Dann erscheint die Schaltspannung P nicht, und der Transistor T3 bleibt gesperrt. Das ist die Betriebsart, bei der Cs2 wirksam, der wirksame Tangenskondensator klein ist und somit die maximale Zoomwirkung vorliegt. Wenn U1 größer wird, wird U2 kleiner. Bei Verringerung von U2 erreicht schließlich U2 den Wert von +Uz, so daß bei Berücksichtigung der Basis-Emitterspannung T4 leitend wird. Dadurch wird auch T5, der zusammen mit den Widerständen 18, 19 als Emitterfolger arbeitet, leitend und erzeugt jetzt die Schaltspannung P. Es ist ersichtlich, daß die Dauer der leitenden Phasen von T4 und T5 und damit die Dauer der Schaltspannung P von der Spannung U2 und somit der Spannung U1 abhängt. Durch Betätigung des symbolisch dargestellten Potentiometers 17 im Prozessor 16 kann somit die jeweilige gewünschte Zoomwirkung im Sinne von Fig. 1 eingestellt werden. Die dargestellte Schaltung ist somit in der Lage, die Schaltspannung P jeweils mit Beginn in Zeilenmitte tm und einstellbarer Dauer zu erzeugen.

## Patentansprüche

1. Schaltung zur kontinuierlichen Zoom-Einstellung der Bildbreite in einem Fernsehempfänger mit einer Zeilenendstufe, Zeilenablenkspulen (5) und einem im Weg des Ablenkstroms liegenden Tangenskondensator (Cs), **gekennzeichnet durch** folgende Merkmale:
a) in Reihe zum Tangenskondensator (Cs1) liegt ein zweiter Kondensator (Cs2), und parallel zu dem zweiten Kondensator (Cs2) liegt ein Schalter (S) der durch eine Schaltspannung (P) mit Beginn in Zeilenmitte (tm) für eine einstellbare Zeit geschlossen wird,
oder
b) parallel zum Tangenskondensator (Cs1) liegt ein zweiter Kondensator (Cs2) und in Reihe zu dem zweiten Kondensator (Cs2) liegt ein Schalter (S), der durch eine Schaltspannung (P) mit Beginn in Zeilenmitte (tm) für eine einstellbare Zeit geschlossen wird.

2. Schaltung nach Anspruch 1, **dadurch gekennzeichnet**, daß der Tangenskondensator (Cs1) und/oder der zweite Kondensator (Cs2) transformatorisch an den Weg des Ablenkstroms angekoppelt ist.

3. Schaltung nach Anspruch 2, **dadurch gekennzeichnet**, daß die Kondensatoren (Cs1, Cs2) in Reihe zu der Sekundärwicklung (10) eines Transformators (Tr2) liegen, dessen Primärwicklung (9) im Weg des Ablenkstroms liegt.

4. Schaltung nach Anspruch 3, **dadurch gekennzeichnet**, daß ein Ende der Sekundärwicklung (10) an den Mittelpunkt (11) der Reihenschaltung von zwei Freilaufdioden (D5, D6) angeschlossen ist, die parallel zum Zeilenendstufentransistor (T1) liegt.

5. Schaltung nach Anspruch 3, **dadurch gekennzeichnet**, daß als Transformator der Zeilenhochspannungstransformator (Tr1) ausgenutzt ist.

6. Schaltung nach Anspruch 1, **dadurch gekennzeichnet**, daß die Schaltspannung (P) vom Ausgang einer Vergleichsschaltung (T4) abgeleitet ist, an die die Summe aus der parabelförmigen Spannung (Ucs) am Tangenskondensator (Cs) und einer einstellbaren Gleichspannung (U2) sowie eine feste Referenzgleichspannung (Uz) angelegt sind.

7. Schaltung nach Anspruch 6, **dadurch gekennzeichnet,** daß die Vergleichsschaltung einen Transistor (T4) enthält, dessen Basis über einen Kondensator (12) an den Tangenskondensator (Cs) und außerdem an den Abgriff eines von einer Gleichspannung gespeisten einstellbaren Spannungsteilers (14, 15) angeschlossen ist, an dessen Emitter eine mit einer Zenerdiode (Z) stabilisierte Referenzspannung (+Uz) angelegt und von dessen Kollektor die Schaltspannung (P) abgeleitet ist.

8. Schaltung nach Anspruch 1, **dadurch gekennzeichnet,** daß der Schalter (S) durch die Parallelschaltung eines MOSFET-Transistors (T3) und einer Diode (D4) gebildet ist.

## Claims

1. A circuit for the continuous zoom adjustment of the picture width in a television receiver having a line output stage, line scanning coils (5) and a tangential capacitor (Cs) arranged in the path of the scanning current,
characterised by the following features:
a) a second capacitor (Cs2) is arranged in series with the tangential capacitor (Cs1) and a switch (S), which is closed for an adjustable time by a switching voltage (P) commencing at the line centre (tm), is arranged in parallel with the second capacitor (Cs2)
or
b) a second capacitor (Cs2) is arranged in parallel with the tangential capacitor (Cs1) and a switch (S), which is closed for an adjustable time by a switching voltage (P) commencing at the line centre (tm), is arranged in series with the second capacitor (Cs2).

2. A circuit according to Claim 1, characterised in that the tangential capacitor (Cs1) and/or the second capacitor (Cs2) is transformer-coupled to the path of the scanning current.

3. A circuit according to Claim 2, characterised in that the capacitors (Cs1, Cs2) are arranged in series with the secondary winding (10) of a transformer (Tr2) whose primary winding (9) is arranged in the path of the scanning current.

4. A circuit according to Claim 3, characterised in that one end of the secondary winding (10) is connected to the centre point (11) of the series connection of two freewheeling diodes (D5, D6) arranged in parallel with the line output stage transformer (Tr1).

5. A circuit according to Claim 3, characterised in that the line high voltage transformer (Tr1) is used as transformer.

6. A circuit according to Claim 1, characterised in that the switching voltage (P) is derived from the output of a comparator circuit (T4) to which are applied the sum of the parabolic voltage (Ucs) across the tangential capacitor (Cs) and an adjustable d.c. voltage (U2) as well as a fixed reference d.c. voltage (Uz).

7. A circuit according to Claim 6, characterised in that the comparator circuit contains a transistor (T4), the base of which is connected via a capacitor (12) to the tangential capacitor (Cs) and also to the tapping of an adjustable voltage divider (14, 15) supplied with a d.c. voltage, to the emitter of which a reference voltage (+Uz) stabilized with a Zener diode (Z) is applied, and from the collector of which the switching voltage (P) is derived.

8. A circuit according to Claim 1, characterised in that the switch (S) is formed by the parallel connection of a MOSFET transistor (T3) and a diode (D4).

## Revendications

1. Circuit de réglage permanent du zoom de largeur d'image dans un téléviseur avec étage final de lignes, bobines déflectrices de lignes (5) et condensateur de tangente (Cs) placé dans le sens du courant de déviation, **caractérisé par** les propriétés suivantes :
a) un deuxième condensateur (Cs2) est installé en ligne par rapport au condensateur de tangente (Cs1) et un commutateur (S) est parallèle au deuxième condensateur (Cs2). Le commutateur (S) est fermé par une tension de commutation (P) commençant par le milieu de ligne (tm) pour une durée réglable.
ou
b) un deuxième condensateur (Cs2) est installé parallèlement au condensateur de tangente (Cs1) et un commutateur (S) est installé en ligne par rapport au deuxième condensateur (Cs2). Le commutateur (S) est fermé par une tension de commutation (P) commençant par le milieu de ligne (tm) pour une durée réglable.

2. Circuit selon la revendication 1, **caractérisé en ce que** le condensateur de tangente (Cs1) et/ou le deuxième condensateur (Cs2) sont couplés par transformateur au trajet du courant de déviation.

3. Circuit selon la revendication 2, **caractérisé en ce que** les condensateurs (Cs1, Cs2) sont installés en ligne par rapport au bobinage secondaire (10) d'un transformateur (Tr2) dont le bobinage primaire (9) est placé sur le trajet du courant de déviation.

4. Circuit selon la revendication 3, **caractérisé en ce qu'**une extrémité du bobinage secondaire (10) est reliée au point central (11) du circuit série de deux diodes « roue libre » (D5, D6) qui est parallèle au transistor d'étage final de lignes (T1).

5. Circuit selon la revendication 3, **caractérisé en ce que** le transformateur haute tension de lignes (Tr1) est utilisé comme transformateur.

6. Circuit selon la revendication 1, **caractérisé en ce que** la tension de commutation (P) est dérivée en sortie d'un circuit de comparaison (T4) auquel sont appliquées la somme de la tension parabole (Ucs) au niveau du condensateur de tangente (Cs) et une tension continue réglable (U2) ainsi qu'une tension continue de référence fixe (Uz).

7. Circuit selon la revendication 6, **caractérisé en ce que** le circuit de comparaison comporte un transistor (T4) dont la base est connectée via un condensateur (12) au condensateur de tangente (Cs) et d'autre part à la prise d'un diviseur de tension réglable (14, 15). Une tension de référence (+Uz) stabilisée par une diode Zéner (Z) est appliquée sur l'émetteur du diviseur de tension et la tension de commutation (P) est dérivée de son collecteur.

8. Circuit selon la revendication 1, **caractérisé en ce que** le commutateur (S) est constitué par le circuit parallèle d'un transistor MOSFET (T3) et d'une diode (D4).
